# EUROPEAN PATENT SPECIFICATION

(11) **EP 2 408 956 B1**
(45) Date of publication and mention of the grant of the patent: **16.03.2016**
(21) Application number: 10753968.6
(22) Date of filing: 16.03.2010
(51) Int. Cl.: D02G 3/48

(54) **TIRE CORDS**
REIFENKORD
CÂBLES POUR PNEUS

(30) Priority: 16.03.2009 US 160589 P
(43) Date of publication of application: 25.01.2012
(60) Divisional application: 15196121.6
(73) Proprietor: Kordsa Global Endustriyel Iplik Ve Kord Bezi Sanayi Ve Ticaret A.S., 34330 Istanbul (TR); Vorbeck Materials Corp., Jessup, MD 20794 (US)
(72) Inventor: AKSAY, Ilhan A., Princeton New Jersey 08540 (US); GURDAG, Sezen, Degirmendere, Kocaeli (TR); JAVAHERIAN, Nurcin, Kolordu Izmit Kocaeli (TR); LETTOW, John S., Washington District of Columbia 20003 (US); PINO, Gustavo, Beykoz, Istanbul (TR); REDMOND, Kate, Baltimore, Maryland 21230 (US); VATANSEVER, Ali, Kocaeli (TR); YILDIRIM, Ibrahim O., Istanbul (TR)
(74) Representative: Gill Jennings & Every LLP
(86) International application number: PCT/US2010/027447
(87) International publication number: WO 2010/107769

(56) References cited:
- EP-A2- 0 374 356
- WO-A1-2008/045778
- WO-A1-2008/156333
- WO-A2-2008/130431
- GB-A- 2 009 270
- JP-A- H03 124 812
- US-A- 2 947 340
- US-A- 2 979 101
- US-A- 4 204 984
- US-A1- 2003 159 768
- US-A1- 2007 113 759
- US-A1- 2008 315 453

## Description

### Field Of The Invention

The present invention relates to tire cords comprising fibers made from compositions comprising at least one polymer and graphene sheets.

### Background

Natural fibers, modified natural fibers (such as rayon), and synthetic fibers (such as polyesters, polyamides, and aramides (including poly(p-phenylene terephthalate)) have long been used as reinforcing materials (cords) for pneumatic tires. Desirable properties for tire reinforcing cords include one or more of (according to the particular application) mass, strength (and tenacity), modulus (and compression modulus), shrinkage appropriate for the application (including high and low shrink force), toughness, stiffness, dimensional stability (low creep and modulus retention, including rate of modulus loss with respect to temperature), thermal stability (and ability to diffuse heat), static dissipativity, thermal conductivity, chemical stability (and chemical resistance), durability (including bending fatigue, friction fatigue, fretting fatigue and expansion/compression fatigue resistance), and ability to adhere to rubber).

Furthermore, it is often desirable that the cords retain useful physical, chemical, and/or mechanical properties (such as strength, modulus, adhesion and fatigue) at the elevated temperatures tires often experience during use. Even higher demands are often placed on such physical property retention by high performance tires, which will often experience even higher in-use temperatures than typical consumer tires.

Because of their combinations of desirable properties with low cost, polyesters and polyamides are the fibers most widely used in tire cords. For many applications, such as body plies and breakers, polyamides and high modulus polyesters having high tenacity, high thermal and chemical stability, low creep, high modulus retention, and high fatigue resistance are desired. Polyamides are often used in cap plies (overlay), where an acceptable balance of modulus, high shrinkage force, low shrinkage, and good adhesion to rubber are desirable properties.

Rayon has very good dimensional stability, but its relatively low strength to weight ratio and its cost limit its use to high performance specialty tires. Aramid fibers have a high modulus and high strength to weight ratio, but their cost and relatively low compression resistance have also limited their use to specialty applications.

It would thus be desirable to obtain polymeric fibers having improved properties, including strength, modulus, shrinkage, dimensional stability, thermal and chemical stability and fatigue resistance. Improved strength per unit weight (tenacity) could, for example, allow for the construction of lighter tires. Improved modulus and/or bending stiffness could also permit the replacement of steel or reduction of the amount of steel used in certain components, which could reduce tire weigh or allow for improved tire handling characteristics at the same or a reduced weight. Furthermore, improved retention of physical properties such as modulus and strength at elevated temperatures would enable polymeric cords to be used more widely in tires (such as high speed tires) that run at higher temperatures. US-A1-2008-315453 discloses tire cords comprising fibers made of a polymer and graphene sheets.

### Summary of the Invention

According to the present invention there is provided a tire cord comprising: a fiber having a composition including a polymer and graphene sheets having a surface area of from 100 m²/g to 2630 m²/g, wherein the fiber was subjected to a drawing process subsequent to a spinning process and the fiber has an average diameter of 1µm to 1.5mm.

### Brief Description of the Drawings

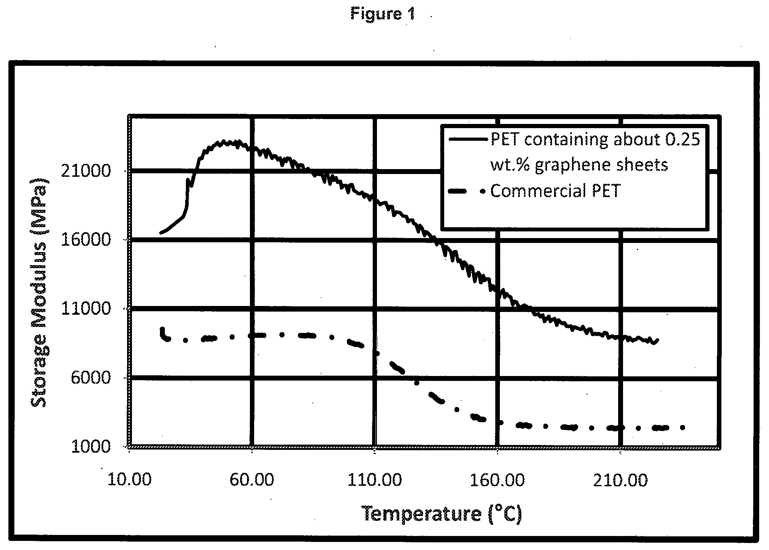

Figure 1 shows a plot of the storage modulus vs. temperature of monofilaments comprising poly(ethylene terephthalate) containing 0.25 wt.% graphene sheets and of commercial PET monofilaments.

### Detailed Description

Tire cords described herein include fibers that comprise a composition including at least one polymer and graphene sheets. The polymer can be, for example, a polyamide and/or a polyester. The fibers can be in the form of polyamide, polyesters, acrylics, acetates, modacrylics, spandex and/or lyocell.

The fibers (also referred to herein as filaments) can take on a variety of forms, including, staple fibers (also referred to as spun fibers), monofilaments and multifilaments. In some embodiments, the fibers can have a number average diameter of about 1 µm to about 1 .5 mm, or of about 15 µm to about 1 .5 mm Such fibers, either alone or in conjunction with at least one other fiber or material, can be formed into a yarn. The yarn, either alone or in conjunction with at least one other yarn, ply, fiber, or other material, can then be formed into a tire cord.

The fibers can be of any cross-sectional shape. For example, they can have a circular or substantially circular cross-section, or have cross-sections that are, for example, oval, star-shaped, multilobal (including trilobal), square, rectangular, polygonal, irregular, etc. They can also be hollow in their entirety or in part and it can have a foam-like structure. The fibers can be crimped, bent, twisted and/or woven.

Fibers can be in the form of a multicomponent (such as a bicomponent) composite structure (these are also referred to as conjugate fibers), including, for example multilayered structures comprising two or more concentric and/or eccentric layers (including inner core and outer sheath layers), or a side-by-side structure. These can be obtained, for example, by extruding two or more polymers from the same spinnerette.

In one embodiment, each of the components of the structures include a form of the composition. In another embodiment, at least one of the components includes a form of the composition and another of the components includes a material without the composition. For example, other components (such as layers) may comprise other polymeric materials.

Examples of bicomponent structures include fibers comprising a polyester core and a copolyester sheath, a polyester core and a polyethylene sheath, a polyester core and a polyamide sheath, a poly(ethylene naphthalate) core and a sheath of another polyester, a polyamide core and a copolyamide sheath, a polyamide core and a polyester sheath, or a polypropylene core and a polyethylene sheath.

The polymers can be of any suitable type, including thermoplastics, elastomers, non-melt-processable polymers, thermoset polymers, etc. Examples of polymers include, but are not limited to: polyamides, polyesters, polyolefins (such as polyethylene, ultrahigh molecular weight polyethylene, linear low density polyethylene (LLDPE), low density polyethylene (LDPE), high density polyethylene, polypropylene, and olefin copolymers), cellulosic polymers, rayon, cellulose acetate, acrylics, poly(methyl methacrylate) and other acrylate polymers, poly(phenylene sulfide) (PPS), poly(acrylonitrile) and poly(acrylonitrile) copolymers (such as copolymers with vinyl acetate, methyl acrylate, and/or methyl methacrylate), melamine polymers, polybenzimidazole (PBI), polyurethanes (including thermoplastics and thermosets), poly(p-phenylene-2,6-benzobisoxazole) (PBO), polyphenylene benzobisthiazole, poly{2,6-diimidazo[4,5-ifc):4',5'-e]pyridinylene-1 ,4-(2,5-dihydroxy)phenylene}) (PIPD), liquid crystalline polyesters, aramids (such as those sold by DuPont under the trademarks Kevlar® and Nomex®, including poly(m-phenylene isophtalamide)s and poly(*p*-phenylene terephthalamide)s, and co-poly-(paraphenylene/3,4'-oxydiphenylene terephthalamide)), and polymers derived from polyurethane and aliphatic polyethers (including polyether polyols such as poly(ethylene glycol), poly(propylene glycol), poly(tetramethylene ether) glycol (PTMEG), and the like)).

Other polymers include, for example, styrene/butadiene rubbers (SBR), styrene/ethylene/butadiene/styrene copolymers (SEBS), butyl rubbers, ethylene/propylene copolymers (EPR), ethylene/propylene/diene monomer copolymers (EPDM), polystyrene (including high impact polystyrene), poly(vinyl acetates), ethylene/vinyl acetate copolymers (EVA), poly(vinyl alcohols), ethylene/vinyl alcohol copolymers (EVOH), poly(vinyl butyral), acrylonitrile/butadiene/styrene (ABS), styrene/acrylonitrile polymers (SAN), styrene/maleic anhydride polymers, poly(ethylene oxide), poly(propylene oxide), poly(acrylonitrile), polycarbonates (PC), polyamides, polyesters, liquid crystalline polymers (LCPs), poly(lactic acid), poly(phenylene oxide) (PPO), PPO-polyamide alloys, polysulfones (PSU), polyether sulfones, polyurethanes, polyetherketone (PEK), polyetheretherketone (PEEK), polyimides, polyoxymethylene (POM) homo- and copolymers, polyetherimides, fluoropolymers (such as polytetrafluoroethylene (PTFE), fluorinated ethylene propylene polymers (FEP), poly(vinyl fluoride), and poly(vinylidene fluoride)), poly(vinylidene chloride), poly(vinyl chloride), and epoxy polymers.

The polymers can be elastomers such as, for example, polyurethanes, copolyetheresters, rubbers (including butyl rubbers and natural rubbers), styrene/butadiene copolymers, styrene/ethylene/butadiene/styrene copolymer (SEBS), polyisoprene, ethylene/propylene copolymers (EPR), ethylene/propylene/diene monomer copolymers (EPDM), polysiloxanes, and polyesters (such as poly(ethylene oxide), poly(propylene oxide), and their copolymers).

Preferred polymers include polyamides and polyesters (including, for example, thermoplastic and semicrystalline polyamides and polyesters), aramides, polyolefins, and rayons.

Examples of suitable polyamides include, but are not limited to, aliphatic polyamides (such as polyamide 4,6; polyamide 6,6; polyamide 6; polyamide 11; polyamide 12; polyamide 6,9; polyamide 6,10; polyamide 6,12; polyamide 10,10; polyamide 10,12; and polyamide 12,12), alicyclic polyamides, and aromatic polyamides (such as poly(*m*-xylylene adipamide) (polyamide MXD,6) and polyterephthalamides such as poly(dodecamethylene terephthalamide) (polyamide 12,T), poly(decamethylene terephthalamide) (polyamide 10,T), poly(nonamethylene terephthalamide) (polyamide 9,T), the polyamide of hexamethylene terephthalamide and hexamethylene adipamide, and the polyamide of hexamethyleneterephthalamide, and 2-methylpentamethyleneterephthalamide) and copolymers of the foregoing. Preferred polyamides include polyamide 6,6; polyamide 6; and copolymers of polyamide 6 and polyamide 6,6. The polyamide 6,6 may have a relative viscosity of at least about 65 when measured in 96% formic acid. The polyamides 6 may have a relative viscosity of at least about 85 when measured in 96% formic acid.

Examples of suitable polyesters include, but are not limited to, semiaromatic polyesters, such as poly(butylene terephthalate) (PBT), poly(ethylene terephthalate) (PET), poly(1,3-propylene terephthalate) (PPT), poly(ethylene naphthalate) (PEN), and poly(cyclohexanedimethanol terephthalate) (PCT)), aliphatic polyesters (such as poly(lactic acid), and copolymers thereof. Preferred polyesters are PET, PPT, and PEN. Particularly preferred is PET. Polyesters can include copolyetheresters. Preferred polyesters have an intrinsic viscosity of at least about 0.8 when measured in *ortho*-chlorophenol.

The graphene sheets are graphite sheets preferably having a surface area of at least about 100 m²/g to about 2630 m²/g. In some embodiments, the graphene sheets primarily, almost completely, or completely comprise fully exfoliated single sheets of graphite (these are approximately 1 nm thick and are often referred to as "graphene"), while in other embodiments, they comprise partially exfoliated graphite sheets, in which two or more sheets of graphite have not been exfoliated from each other. The graphene sheets can comprise mixtures of fully and partially exfoliated graphite sheets.

One method of obtaining graphene sheets is from graphite and/or graphite oxide (also known as graphitic acid or graphene oxide). Graphite can be treated with oxidizing and intercalating agents and exfoliated. Graphite can also be treated with intercalating agents and electrochemically oxidized and exfoliated. Graphene sheets can be formed by ultrasonically exfoliating suspensions of graphite and/or graphite oxide in a liquid. Exfoliated graphite oxide dispersions or suspensions can be subsequently reduced to graphene sheets. Graphene sheets can also be formed by mechanical treatment (such as grinding or milling) to exfoliate graphite or graphite oxide (which would subsequently be reduced to graphene sheets).

Graphite oxide can be reduced to graphene by chemical reduction using hydrogen gas or other reducing agents. Examples of useful chemical reducing agents include, but are not limited to, hydrazines (such as hydrazine, *N,N*-dimethylhydrazine, etc.), sodium borohydride, hydroquinone, citric acid, etc. For example, a dispersion of exfoliated graphite oxide in a carrier (such as water, organic solvents, or a mixture of solvents) can be made using any suitable method (such as ultrasonication and/or mechanical grinding or milling) and reduced to graphene sheets.

One method of exfoliation includes thermal exfoliation and ultrasonication of suspensions. The graphite can be any suitable type, including natural, Kish, and synthetic/pyrolytic graphites and graphitic materials such as, for example, graphitic carbon fibers (including those derived from polymers), and highly oriented pyrolytic graphite.

One method of preparing graphene sheets, graphite is first oxidized to graphite oxide, which is then thermally exfoliated to form high surface area graphene sheets in the form of thermally exfoliated graphite oxide. Such a method is generally described in U.S. Patent Pub. No. 2007/0092432, entitled "Thermally Exfoliated Graphite Oxide" by Prud'Homme et al. The thusly formed thermally exfoliated graphite oxide may display little or no signature corresponding to graphite or graphite oxide in its X-ray diffraction pattern.

Graphite oxide may be produced by any method known in the art, such as by a process that involves oxidation of graphite using one or more chemical oxidizing agents and, optionally, intercalating agents such as sulfuric acid. Examples of oxidizing agents include nitric acid, sodium and potassium nitrates, perchlorates, hydrogen peroxide, sodium and potassium permanganates, phosphorus pentoxide and bisulfites. Preferred oxidants include KClO₄; HNO₃ and KClO₃; KMnO₄ and/or NaMnO₄; KMnO₄ and NaNO₃; K₂S₂O₈ and P₂O₅ and KMnO₄; KMnO₄ and HNO₃; and HNO₃. A preferred intercalation agent includes sulfuric acid. Graphite can also be treated with intercalating agents and electrochemically oxidized.

The graphene sheets preferably have an average aspect ratio of about 100 to 100,000 (where "aspect ratio" is defined as the ratio of the longest dimension of the sheet to the shortest dimension of the sheet).

The graphene sheets preferably have a surface area of from about 100 m²/g to about 2,630 m²/g, or more preferably of from about 200 m²/g to about 2,630 m²/g, or yet more preferably of from about 300 m²/g to about 2,630 m²/g, or even more preferably from about 350 m²/g to about 2,630 m²/g, or still more preferably of from about 400 m²/g to about 2,630 m²/g, or further more preferably of from about 500 m²/g to about 2,630 m²/g. In another preferred embodiment, the surface area is about 300 m²/g to about 1,100 m²/g. A single graphite sheet has a maximum calculated surface area of 2,630 m²/g. The surface area includes all values and subvalues therebetween, especially including 400, 500, 600, 700, 800, 900, 1000, 1100, 1,200, 1 ,300, 1 ,400, 1 ,500, 1 ,600, 1 ,700, 1 ,800, 1 ,900, 2,000, 2,100, 2,200, 2,300, 2,400, 2,500, and 2,630 m2/g.

Surface area can be measured using either the nitrogen adsorption/BET method at 77 K or a methylene blue (MB) dye method in a liquid solution. The dye method is carried out as follows. A known amount of graphene sheets is added to a flask. At least 1 .5 g of MB per gram of graphene sheets is then added to the flask. Ethanol is added to the flask and the mixture is ultrasonicated for about fifteen minutes. The ethanol is then evaporated and a known quantity of water is added to the flask to re-dissolve the free MB. The undissolved material is allowed to settle, preferably by centrifuging the sample. The concentration of MB in solution is determined using a UV-vis spectrophotometer by measuring the absorption at λₘₐₓ = 298 nm relative to that of standard concentrations.

The difference between the amount of MB that was initially added and the amount present in solution as determined by UV-vis spectrophotometry is assumed to be the amount of MB that has been adsorbed onto the surface of the graphene sheets. The surface area of the graphene sheets is then calculated using a value of 2.54 m² of surface covered per milligram of MB adsorbed.

The graphene sheets preferably have a bulk density of from about 0.1 kg/m³ to at least about 200 kg/m³. The bulk density includes all values and subvalues therebetween, especially including 0.5, 1, 5, 10, 15, 20, 25, 30, 35, 50, 75, 100, 125, 150, and 175 kg/m³.

The graphene sheets can be functionalized with, for example, oxygen-containing functional groups (including, for example, hydroxyl, carboxyl, and epoxy groups) and typically have an overall carbon to oxygen molar ratio (C/O ratio), as determined by elemental analysis of at least about 1:1, or more preferably, at least about 3:2. Examples of carbon to oxygen ratios include about 3:2 to about 85:15; about 3:2 to about 20:1; about 3:2 to about 30:1; about 3:2 to about 40:1; about 3:2 to about 60:1; about 3:2 to about 80:1; about 3:2 to about 100:1; about 3:2 to about 200:1; about 3:2 to about 500:1; about 3:2 to about 1000:1; about 3:2 to greater than 1000:1; about 10:1 to about 30:1; about 80:1 to about 100:1; about 20:1 to about 100:1; about 20:1 to about 500:1; about 20:1 to about 1000:1. In some embodiments of the invention, the carbon to oxygen ratio is at least about 10:1, or at least about 20:1, or at least about 35:1, or at least about 50:1, or at least about 75:1, or at least about 100:1, or at least about 200:1, or at least about 300:1, or at least about 400:1, or at least 500:1, or at least about 750:1, or at least about 1000:1 ; or at least about 1500:1 , or at least about 2000:1. The carbon to oxygen ratio also includes all values and subvalues between these ranges.

The surface of the graphene sheets can be modified by the addition of molecules including hydrocarbons, and those containing neutral or charged functional groups, such as oxygen-, nitrogen-, halogen-, sulfur-, carbon-containing functional groups. Examples of functional groups include hydroxyl groups, amine groups, ammonium groups, sulphates, sulphonates, epoxy groups, carboxylate and carboxylic acid groups, esters and anhydrides. The modifying molecules may be bound to the surface of the graphene sheets covalently, ionically, via hydrogen bonding, electrostatically or via physical adsorption.

The graphene sheets can contain atomic scale kinks due to the presence of lattice defects in the honeycomb structure of the graphite basal plane. These kinks can be desirable to prevent the stacking of the single sheets back to graphite oxide and/or other graphite structures under the influence of van der Waals forces. Kinks may also be desirable for adjusting the moduli of the sheets in the composite applications where at low strains the kinks yield at low stress levels and thus provide a gradually increasing modulus (75 to 250 GPa), and at high strains moduli as high as 1 TPa may be attained. The kinks can also be desirable for mechanical interlocking in the composite structures.

The compositions can optionally further include additional polymers and/or additional additives, including stabilizers (such as thermal, oxidative, and/or UV light resistant stabilizers), nucleating agents, colorants (such as pigments and/or dyes), other nanofillers (such as nanoclays), other carbon-based fillers (such as carbon nanotubes, carbon black and/or graphite), lusterants, delusterants (e.g., titanium dioxide), lubricants and/or dye-adhesion promoters.

The compositions preferably include at least about 0.0001 wt% graphene sheets, based on the total weight of the graphene sheets and polymer. The graphene sheets can be present in at least about 0.005 wt%, in at least about 0.001 wt%, in at least about 0.01 wt%, in at least about 0.05 wt%, in at least about 0.1 wt%, in at least about 0.2 wt%, or in at least about 0.25 wt% (where all weight percentages are based on the total weight of the graphene sheets and polymer.

Preferred ranges in which the graphene sheets are present in the compositions include about 0.0001 to about 3 weight percent, about 0.001 to about 3 weight percent, about 0.005 to about 3 weight percent, about 0.01 to about 3 weight percent, about 0.01 to about 2 weight percent, about 0.025 to about 2 weight percent, about 0.05 to about 2 weight percent, about 0.05 to about 1 weight percent, about 0.05 to about 0.5 weight percent, about 0.1 to about 1 weight percent, about 0.1 to about 0.5 weight percent, and about 0.1 to about 0.3 weight percent (where all weight percentages are based on the total weight of the graphene sheets and polymer).

If the polymer is melt processable, the compositions can be made prior to fiber formation using any suitable melt-blending method, including using a single or twin-screw extruder, a blender, a kneader, or a Banbury mixer. In one embodiment, the compositions are melt-mixed blends wherein the non-polymeric ingredients are well-dispersed in the polymer matrix, such that the blend forms a unified whole.

The compositions can be formed by preparing a suspension of graphene sheets in a liquid carrier (such as a solvent or water) and combining the suspension with the polymer prior to melt blending. The relative amounts of the suspension and polymer can be chosen such that the graphene sheets coat the surface of the polymer. The polymer can be in a ground or powdered form and the resulting mixture can be in the form of a solid or crumbly material. The carrier can be removed in whole or in part prior to melt blending.

The compositions can also be formed by dry blending polymer and a master batch containing polymer and graphene sheets prior to melt spinning. In such a method, the master batch preferably comprises up to about 50 wt% graphene sheets, or more preferably from about 2 wt% to about 20 wt% graphene, based on the total weight of the master batch.

The compositions can also be made by combining graphene sheets (and optionally, additional components) with monomers that are polymerized to form the polymer.

The fibers can be formed by any suitable method such as, for example, extrusion, melt spinning, solvent (wet) spinning, dry spinning, gel spinning, reaction spinning or electrospinning. For example, when spinning, suitable nozzles (such as spinnerettes) may be selected to form monofilament or multifilament fibers.

When melt spinning, a quench zone can be used for the solidification of the filaments. Examples of quench zones include cross-flow, radial, horizontal, water bath, and other cooling systems. A quench delay zone that may be heat or unheated can be used. Temperature control may be done using any suitable medium, such as a liquid (e.g. water) or a gas (e.g. air).

Filaments and/or yarns can be subjected to one or more drawing and/or relaxation operations during and/or subsequent to the spinning process. Drawing and/or relaxation processes can be combined with the spinning processes (such as by using a spin draw process), or can be done using separate drawing equipment to pre-spun fibers in form of monofilament or multifilament yarns. The drawing process can be done, for example, by using different speed single or duo godets or rolls, with heating (hot drawing), without heating (cold drawing), or both. The draw ratio can be controlled by heating and/or annealing during the quench delay zone. Heating can be achieved using heated godets, one or more hot boxes, etc. Relaxation can be done with heating (hot drawing), without heating (cold drawing), or both.

The spinning speed, spinline tension, spinline temperature, number of drawing stages, draw ratio, relaxation ratio, speed ratios between each relaxation and drawing step, and other parameters can vary. The parameters of the drawing and/or relaxation processes can be selected according to the polymer or polymers used, the polymer structures, processibility requirements, and/or desired physical and/or chemical properties of the fibers and/or filaments.

Spinning and/or drawing processes can affect one or more of the degree of crystallization, crystallization rates, crystal structure and size, crystalline orientation and amorphous orientation. Filament and yarn properties (such as tensile modulus and strength) may vary as a function of spinning and/or drawing processes. In certain cases it is possible that the functional ized graphene sheets increase orientation and crystallization of the polymer structure during the spinning processes.

A spin finish oil may optionally be applied to the filament after quenching but before any drawing and/or relaxation steps. A finish oil may also be optionally applied to fibers before or during subsequent processes such as twisting, weaving and dipping.

The fibers, either alone or in conjunction with at least one other fiber or material, can be formed into yarns that comprise at least one fiber of the present invention. The yarns can be in the form of filament yarns and/or spun yarns. The yarns, either alone or in conjunction with at least one other yarn, ply, fiber, or other material, can then be formed into a tire cord.

Prior to incorporating the tire cord into a tire, the tire cords can be incorporated into structures (referred to herein as "tire cord structures"). Examples of tire cord structures include strips, tapes, fabrics or ply structures. The tire cord structures can be twisted, woven, non-woven, or assembled using any suitable method or a combination thereof.

The tire cords and/or tire cord structures can be embedded in rubber to form belts, plies, cap plies, or single end cords. They can be used as belt plies, body plies and chafer fabrics. Calendering can also be used to incorporate the tire cords and/or tire cord structures into rubber.

Examples of rubbers include, but are not limited to, natural rubber, butyl rubber, polybutadiene, stryrene-butadiene rubber, isobutylene-isoprene rubber, chlorobutyl rubber, bromobutyl rubber, neoprene, polyisoprene, chloroprene rubber and nitrile rubber. The tire cord can be treated with an adhesive prior to being embedded into the rubber. Examples of adhesives include RFL (resorcinol formaldehyde latex) dips, cements, isocyanates and epoxies.

The tire cords and tire cord structures can be used in non-pneumatic tires and pneumatic tires, including radial tires, bias ply tires, tubeless tires, etc. The tires cab be used in motorized vehicles, equipment, and accessories such as, but not limited to, automobiles, trucks, motorcycles, mopeds, all terrain vehicles, golf carts, construction equipment, lawn mowers, tractors, harvesters, trailers, wheelchairs, etc. They can also be used in non-motorized vehicles, equipment, and accessories such as, but not limited to, bicycles, tricycles, unicycles, wheelchairs, wheel barrows, carts, etc.

### Examples

### Example 1

Graphene sheets are added to poly(ethylene terephthalate) (PET) by melt compounding in an extruder to yield a PET composition comprising about 0.25 weight percent graphene sheets. The PET composition is then solid phase polymerized at 215 0C to an IV of about 1 dL/g. The composition is spun into monofilaments that are then post drawn to a draw ratio of about 4 to 5. After drawing, the filaments have a diameter of about 120 microns. The storage modulus of the monofilaments is then measured as a function of temperature using a dynamic mechanical analyzer (DMA). The results are given in Table 1 and in Figure 1.

### Comparative Example 1

The storage modulus of commercial PET monofilaments having an IV of about 0.6 to 0.8 dL/g and a diameter of about 250 microns is measured using a DMA. The commercial PET and the PET of Example 1 have similar tenacities The results are given in Table 1 and Figure 1.

**Table 1**

| | | Example 1 | Comparative Ex. 1 |
|---|---|---|---|
| | 32 °C | 17.7 | 8.83 |
| | 52 °C | 22.9 | 8.99 |
| | 70 °C | 21.8 | 9.13 |
| Storage modulus (GPa) | 90 °C | 20.7 | 9.00 |
| | 110 °C | 19.0 | 7.85 |
| | 130 °C | 16.3 | 5.21 |
| | 150 °C | 14.0 | 3.34 |
| | 170 °C | 11.2 | 2.56 |
| | 190 °C | 9.82 | 2.49 |
| | 210 °C | 8.89 | 2.45 |

## Claims

1. A tire cord comprising:
a fiber having a composition including a polymer and graphene sheets having a surface area of from 100 m²/g to 2630 m²/g, wherein the fiber was subjected to a drawing process subsequent to a spinning process and the fiber has an average diameter of 1 µm to 1.5mm.

2. The cord of claim 1, further comprising:
at least one adhesive.

3. The cord of claim 2, wherein the adhesive is one or more selected from resorcinol formaldehyde latex dips, cements, isocyanates, and epoxies.

4. The tire cord of claim 1, wherein the polymer is one or more polymers selected from the group consisting of polyamides, polyesters, polyolefins, cellulosic fibers, and rayon.

5. The cord of claim 4, wherein the polyamide is one or more of aramids, polyamide 6,6; polyamide 6; and polyamide 6,6/polyamide 6 copolymers.

6. The cord of claim 4, wherein the polyester is poly(ethylene terephthalate), or the polyester is poly(ethylene naphthalate), or wherein the polymer is an aramid, or wherein the polymer is rayon.

7. The cord of claim 1, wherein the composition comprises 0.001 wt% to 3 wt% graphene sheets, based on the total weight of the graphene sheets and polymer, or wherein the composition comprises 0.05 wt% to 2 wt% graphene sheets, based on the total weight of the graphene sheets and polymer.

8. The cord of claim 1, wherein the graphene sheets have a surface area of from 300 m²/g to 2,630 m²/g.

9. The cord of claim 1, wherein the graphene sheets have a carbon to oxygen molar ratio of at least 10 to 1, or wherein the graphene sheets have a carbon to oxygen molar ratio of at least 20 to 1, or wherein the graphene sheets have a carbon to oxygen molar ratio of at least 50 to 1, or wherein the graphene sheets have a carbon to oxygen molar ratio of at least 100 to 1.

10. The cord of claim1 in the form of a single end cord.

11. A strip comprising the tire cord of claim 1.

12. A fabric comprising the tire cord of claim 1.

13. The fabric of claim 12, wherein the cord has been treated with at least one adhesive.

14. The fabric of claim 13, wherein the adhesive is one or more selected from resorcinol formaldehyde latex dips, cements, isocyanates, and epoxies.

15. The fabric of claim 12, wherein the fabric has a rubber coating.

16. The fabric of claim 12 in the form of a chafer fabric.

17. A ply comprising the tire cord of claim 1.

18. A cap ply comprising the ply of claim 17.

19. A tire belt comprising the tire cord of claim 1.

20. A tire belt comprising the fabric of claim 12.

21. A tire carcass comprising the tire cord of claim 1.

22. A tire comprising the tire cord of claim 1.

## Patentansprüche

1. Ein Reifenkord bestehend aus:
einer Faser mit einer Zusammensetzung, zu der ein Polymer und Graphenschichten gehören, mit einer Oberfläche von 100 m²/g bis 2630 m²/, wobei die Faser nach einem Spinnverfahren einem Ziehverfahren unterzogen wurde und die Faser einen durchschnittlichen Durchmesser von 1 µm bis 1,5 mm aufweist.

2. Der Kord entsprechend Anspruch 1, der weiterhin folgendes umfasst:
zumindest einen Klebstoff.

3. Der Kord entsprechend Anspruch 2, wobei der Klebstoff einer oder mehrere ist, der/die aus Resorcin-Formaldehyd-Latex-Dispersionen, Zementen, Isocyanaten und Epoxiden ausgewählt wird/werden.

4. Der Reifenkord entsprechend Anspruch 1, wobei es sich beim Polymer um ein oder mehrere Polymere handelt, das/die aus der Gruppe bestehend aus Polyamiden, Polyestern, Polyolefinen, Cellulosefasern und Rayon ausgewählt wird/werden.

5. Der Reifenkord entsprechend Anspruch 4, wobei das Polyamid eines oder mehrere der Folgenden ist, nämlich Polyamid 6,6: Polyamid 6 und Polyamid 6,6/Polyamid 6 Copolymere.

6. Der Reifenkord entsprechend Anspruch 4, wobei der Polyester Poly(ethylenterephthalat) ist oder der Polyester Poly(ethylennaphthalat) ist oder wobei das Polymer ein Aramid ist oder wobei das Polymer Rayon ist.

7. Der Kord entsprechend Anspruch 1, wobei die Zusammensetzung 0,001 Gew.-% bis 3 Gew.-% Graphenschichten basierend auf dem Gesamtgewicht der Graphenschichten und des Polymers umfasst oder wobei die Zusammensetzung 0,05 Gew.-% bis 2 Gew.-% Graphenschichten basierend auf dem Gesamtgewicht der Graphenschichten und des Polymers umfasst.

8. Der Kord entsprechend Anspruch 1, wobei die Graphenschichten eine Oberfläche von 300 m²/g bis 2630 m²/g aufweisen.

9. Der Kord entsprechend Anspruch 1, wobei die Graphenschichten ein Kohlenstoff-zu Sauerstoff-Molverhältnis von mindestens 10 zu 1 haben oder wobei die Graphenschichten ein Kohlenstoff-zu-Sauerstoff-Molverhältnis von mindestens 20 zu 1 haben oder wobei die Graphenschichten ein Kohlenstoff-zu-Sauerstoff-Molverhältnis von mindestens 50 zu 1 haben oder wobei die Graphenschichten ein Kohlenstoff-zu-Sauerstoff-Molverhältnis von mindestens 100 zu 1 haben.

10. Der Kord entsprechend Anspruch 1 in Form eines einzelnen Endstrangs.

11. Ein Streifen bestehend aus dem Reifenkord entsprechend Anspruch 1.

12. Ein Material bestehend aus dem Reifenkord entsprechend Anspruch 1.

13. Das Material entsprechend Anspruch 12, wobei der Kord mit mindestens einem Klebstoff behandelt wurde.

14. Das Material entsprechend Anspruch 13, wobei der Klebstoff einer oder mehrere ist, der/die aus Resorcin-Formaldehyd-Latex-Dispersionen, Zementen, Isocyanaten und Epoxiden ausgewählt wird/werden.

15. Das Material entsprechend Anspruch 12, wobei das Material eine Gummibeschichtung aufweist.

16. Das Material entsprechend Anspruch 12 in Form eines Wulstschutzbandmaterials.

17. Eine Lage bestehend aus dem Reifenkord entsprechend Anspruch 1.

18. Eine Zwischenlage bestehend aus der Lage entsprechend Anspruch 17.

19. Ein Reifengurt bestehend aus dem Reifenkord entsprechend Anspruch 1.

20. Ein Reifengurt bestehend aus dem Material entsprechend Anspruch 12.

21. Eine Reifenkarkasse bestehend aus dem Reifenkord entsprechend Anspruch 1.

22. Ein Reifen bestehend aus dem Reifenkord entsprechend Anspruch 1.

## Revendications

1. Un câble pour pneu comprenant :
une fibre ayant une composition incluant un polymère et des feuilles de graphène ayant une surface comprise entre 100 m²/g et 2630 m²/g, dans lequel la fibre a été soumise à un processus d'étirage ultérieur à un processus de filage et la fibre a un diamètre moyen compris entre 1 µm et 1,5 mm.

2. Le câble selon la revendication 1, comprenant en outre :
au moins un adhésif.

3. Le câble selon la revendication 2, dans lequel l'adhésif est un ou plusieurs adhésifs sélectionnés parmi les bains de latex de résorcinol-formaldéhyde, les mastics, les isocyanates et les époxydes.

4. Le câble pour pneu selon la revendication 1, dans lequel le polymère est un ou plusieurs polymères sélectionnés parmi le groupe constitué par les polyamides, les polyesters, les polyoléfines, les fibres cellulosiques et la rayonne.

5. Le câble selon la revendication 4, dans lequel le polyamide est un ou plusieurs polyamides parmi les copolymères d'aramides, de polyamide 6,6 ; de polyamide 6 ; et de polyamide 6,6/polyamide 6.

6. Le câble selon la revendication 4, dans lequel le polyester est du polyéthylène téréphtalate ou le polyester est du polyéthylène naphtalate ou dans lequel le polymère est un aramide ou dans lequel le polymère est de la rayonne.

7. Le câble selon la revendication 1, dans lequel la composition comprend entre 0,001% en poids et 3% en poids de feuilles de graphène, sur la base du poids total des feuilles de graphène et du polymère, ou dans lequel la composition comprend entre 0,05% en poids et 2% en poids des feuilles de graphène, sur la base du poids total des feuilles de graphène et du polymère.

8. Le câble selon la revendication 1, dans lequel les feuilles de graphène ont une surface comprise entre 300 m²/g et 2630 m²/g.

9. Le câble selon la revendication 1, dans lequel les feuilles de graphène ont un rapport molaire carbone/oxygène d'au moins 10 à 1, ou dans lequel les feuilles de graphène ont un rapport molaire carbone/oxygène d'au moins 20 à 1, ou dans lequel les feuilles de graphène ont un rapport molaire carbone/oxygène d'au moins 50 à 1, ou dans lequel les feuilles de graphène ont un rapport molaire carbone/oxygène d'au moins 100 à 1.

10. Le câble selon la revendication 1 dans la forme d'un câble à extrémité unique.

11. Une bande comprenant le câble pour pneu selon la revendication 1.

12. Un tissu comprenant le câble pour pneu selon la revendication 1.

13. Le tissu selon la revendication 12, dans lequel le câble a été traité avec au moins un adhésif.

14. Le tissu selon la revendication 13, dans lequel l'adhésif est un ou plusieurs adhésifs sélectionnés parmi les bains de latex de résorcinol-formaldéhyde, les mastics, les isocyanates et les époxydes.

15. Le tissu selon la revendication 12, dans lequel le tissu a un revêtement en caoutchouc.

16. Le tissu selon la revendication 12 dans la forme d'un tissu de talon.

17. Une nappe comprenant le câble pour pneu selon la revendication 1.

18. Une nappe de sommet comprenant la nappe selon la revendication 17.

19. Une ceinture de pneu comprenant le câble pour pneu selon la revendication 1.

20. Une ceinture de pneu comprenant le tissu selon la revendication 12.

21. Une carcasse de pneu comprenant le câble pour pneu selon la revendication 1.

22. Un pneu comprenant le câble pour pneu selon la revendication 1.
